**Europäisches Patentamt**

**European Patent Office**

**Office européen des brevets**

(11) Veröffentlichungsnummer: **0 128 380**
A1

(12) # EUROPÄISCHE PATENTANMELDUNG

(21) Anmeldenummer: **84105429.9**

(51) Int. Cl.³: **F 16 B 19/10**

(22) Anmeldetag: **14.05.84**

(30) Priorität: **09.06.83 DE 8316878 U**

(71) Anmelder: **ESCO METALLWAREN Martin Hühnken, Rudolf-Diesel-Str. 7, D-2072 Bargteheide (DE)**

(43) Veröffentlichungstag der Anmeldung: **19.12.84 Patentblatt 84/51**

(72) Erfinder: **Ghibely, Bruno, Vogelsang 87, D-2070 Ahrensburg (DE)**

(74) Vertreter: **Dipl.-Ing. H. Hauck Dipl.-Phys. W. Schmitz Dipl.-Ing. E. Graalfs Dipl.-Ing. W. Wehnert Dr.-Ing. W. Döring, Neuer Wall 41, D-2000 Hamburg 36 (DE)**

(84) Benannte Vertragsstaaten: **BE DE FR GB IT LU NL SE**

(54) **Blindniet.**

(57) Blindniet zum Verbinden von plattenförmigen Werkstücken (17, 18) mittels an den Außenseiten der Werkstücke anliegender radialer Abschnitte und einem dazwischen angeordneten Schaft (11), in dessen Bohrung ein Dorn (14, 15, 16) aufgenommen ist, wobei ein radialer Bund (10) vorgeformt ist und die Bohrung (12) des Schaftes (11) zum anderen Ende hin konisch verjüngt (13) ist.

ACTORUM AG

PATENTANWÄLTE
DR.-ING. H. NEGENDANK (-1973)
HAUCK, SCHMITZ, GRAALFS, WEHNERT, DÖRING
HAMBURG    MÜNCHEN    DÜSSELDORF

0128380

PATENTANWÄLTE · NEUER WALL 41 · 2000 HAMBURG 36

ESCO Metallwaren
Martin Hühnken
Rudolf-Diesel-Str. 7

2072 Bargteheide

Dipl.-Phys. W. SCHMITZ - Dipl.-Ing. E. GRAALFS
Neuer Wall 41 · 2000 Hamburg 36
Telefon + Telecopier (040) 36 67 55
Telex 02 11 769 inpat d

Dipl.-Ing. H. HAUCK - Dipl.-Ing. W. WEHNERT
Mozartstraße 23 · 8000 München 2
Telefon + Telecopier (089) 53 92 36
Telex 05 216 553 pamu d

Dr.-Ing. W. DÖRING
K.-Wilhelm-Ring 41 · 4000 Düsseldorf 11
Telefon (0211) 57 50 27

_1_

ZUSTELLUNGSANSCHRIFT / PLEASE REPLY TO:    HAMBURG,    11. Mai 1984

Blindniet

Die Neuerung bezieht sich auf einen Blindniet zum Verbinden von plattenförmigen Werkstücken mittels an den Außenseiten der Werkstücke anliegender radialer Abschnitte und einem dazwischen angeordneten Schaft, in dessen Bohrung ein Dorn aufgenommen ist.

Es ist ein Blindniet bekanntgeworden, bei dem an einem Ende ein nach außen weisender radialer Bund oder Flansch geformt ist. Dieser gelangt mit der sichtbaren Seite des Werkstücks zur Anlage. Ein mit einem Kopf versehener Dorn ist durch die Bohrung des Nietschaftes so hindurchgeführt, daß der Kopf auf der nicht sichtbaren Werkstückseite liegt. Wird mit Hilfe einer Spezialzange auf den aus dem Niet herausstehenden Dorn eine Zugkraft aufgebracht, so verformt sich der Nietschaft im Endbereich und bildet dadurch den zweiten am Werkstück anliegenden Flansch. Der Dorn ist ferner mit einer Sollbruchstelle versehen. Bei Erreichen einer vorgegebenen Zugkraft reißt der größte Teil des Dorns ab und kann entfernt werden.

Der bekannte Niet ist verhältnismäßig aufwendig. Er benötigt einen verhältnismäßig langen Dorn, der nach dem Nietvorgang als Abfall anfällt. Aufwendig ist auch die Beseitigung des Dorns nach dem Nieten.

Übliche Nieten erfordern das Angreifen von gegenüberliegenden Seiten. So wird beispielsweise der Kopf eines Hohlnietes von einer Seite gehalten, während der hohle Schaft an der gegenüberliegenden Seite umgebördelt wird. Ähnlich ist bei einem zweiteiligen Niet zu verfahren, bei dem ein Schaft eines Nietteils durch einen Hohlschaft des anderen Nietteils hindurchgeführt wird.

Der Neuerung liegt die Aufgabe zugrunde, einen Blindniet zu schaffen, der einfach herstellbar und anbringbar ist und der mit herkömmlichen Werkzeugen verarbeitet werden kann, ohne daß aufwendige Zusatzausrüstungen notwendig sind.

Diese Aufgabe wird neuerungsgemäß dadurch gelöst, daß ein radialer Bund vorgeformt ist und die Bohrung des Schaftes zum anderen Ende hin konisch verjüngt ist.

0128380

Der neuerungsgemäße Blindniet hat eine Schaftlänge, die um einen gewissen Betrag aus dem Werkstückloch auf der unsichtbaren Seite heraussteht. Im Bereich des Überstands, jedoch auch bereits vorher, ist die Bohrung des Schaftes konisch verjüngt. Wird nun durch ein Schlagwerkzeug der Dorn in die Bohrung eingetrieben, wird der überstehende Teil des Schaftes radial nach außen verformt und bildet an der unsichtbaren Seite ebenfalls einen radialen Bund, der die Werkstückplatten mit dem anderen Bund unter mehr oder weniger Spannung zusammenhält.

Es versteht sich, daß der neuerungsgemäße Blindniet aus einem plastisch verformbaren Metall bestehen muß, beispielsweise aus Aluminium, einer Aluminiumlegierung oder einer geeigneten Stahllegierung.

Das Werkzeug zum Anbringen des neuerungsgemäßen Blindniets kann ein einfaches Schlagwerkzeug sein, beispielsweise ein Hammer oder ein kraftgetriebenes Schlaggerät, das mit pneumatischer oder elektrischer Energie betrieben wird.

Besonders vorteilhaft ist, wenn der Konuswinkel etwa $10^{\circ}$ beträgt. Ein derartiger Winkel, so hat sich gezeigt, führt in optimaler Weise zu der gewünschten Umbördelung auf der unsichtbaren Seite des Schaftes.

Damit das radiale Umlegen des unsichtbaren Endes des Nietschaftes in der gewünschten Weise vonstatten geht, sieht eine Ausgestaltung der Erfindung vor, daß die Verjüngung in einem Bereich beginnt, der innerhalb der Bohrung der miteinander zu verbindenden Werkstücke liegt. Der Dorn beginnt daher beim Eintreiben zunächst eine Verformung in axialer Richtung (eine radiale Verformung wird durch die Bohrungswandung verhindert), so daß ein Teil des verdrängten Materials nach außen tritt. Bei einem weiteren Vordringen des Dorns in den zunehmend enger werdenden Bohrungskonus wird das Material des überstehenden Schaftabschnittes anschließend im wesentlichen radial verformt und um die untere Bohrungskante des Werkstücks herumgelegt. Eine derartige Anformung des überstehenden Abschnitts des Nietschaftes an die Unterseite des Werkstücks führt mithin zu einer ausreichenden Befestigung des Niets mit einer entsprechend hohen mechanischen Haltekraft, die trotz Erschütterungen aufrechterhalten wird.

Damit der Dorn eine wirksame Verformungskraft aufbringen kann, sieht eine Ausgestaltung der Neuerung vor, daß das untere Ende des Dorns gerundet ist. Die Rundung verhindert, daß das Dornende sich in das Material des Nietschaftes eingräbt, ohne daß es zu dem gewünschten radialen Aufweiten kommt.

Da der Nietschaft an der sichtbaren Seite einen Bund aufweist, reicht es aus, wenn nach einer weiteren Ausgestaltung der Neuerung der Dorn durchgehend glatt zylindrisch ist mit gleichem Außendurchmesser. Der Dorn kann kürzer sein als der

0128380

Nietschaft, so daß er in die Bohrung des Nietschaftes weit eingetrieben wird, um die Verformungsarbeit zu leisten und ein Zurückverformen zu verhindern.

Ein Ausführungsbeispiel der Neuerung wird nachfolgend anhand von Zeichnungen näher erläutert.

Fig. 1 zeigt in Seitenansicht teilweise im Schnitt sowie in Draufsicht einen Blindniet nach der Neuerung.

Fig. 2 zeigt in Seitenansicht und in Draufsicht einen Dorn für den Blindniet nach Fig. 1.

Fig. 3 zeigt die Anordnung des neuerungsgemäßen Blindniets im Loch von zwei Werkstückplatten vor dem Eintreiben des Dorns.

Bevor auf die in den Zeichnungen dargestellten Einzelheiten näher eingegangen wird, sei vorangestellt, daß jedes der beschriebenen Merkmale für sich oder in Verbindung mit Merkmalen von Ansprüchen von neuerungswesentlicher Bedeutung ist.

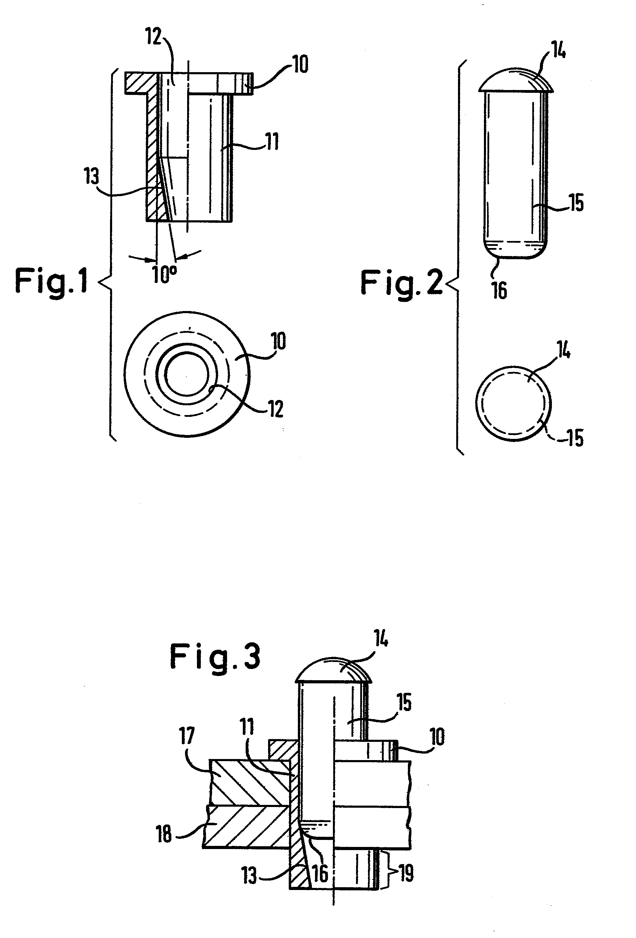

Der in den Figuren 1 und 3 dargestellte Blindniet besitzt einen radialen Bund 10 und einen zylindrischen Schaft 11. Die durchgehende Bohrung 12 ist etwa auf der Hälfte des Schaftes nach unten hin konisch verjüngt, wie bei 13 dargestellt. Der Konuswinkel beträgt 10°. Die Außenseite des Schaftes 11 ist glatt zylindrisch mit gleichem Durchmesser.

In Fig. 2 ist ein Nietdorn dargestellt mit einem linsenförmigen Kopf 14 und einem Dornschaft 15, der durchgehend glatt zylindrisch ist und einen Außendurchmesser hat, der dem Innendurchmesser der Bohrung 12 entspricht. Das untere Ende ist ballig geformt, wie bei 16 dargestellt.

In Fig. 3 sind zwei Werkstückplatten 17, 18 aufeinandergelegt und haben zueinander ausgerichtete Löcher, in die der Schaft 11 des Blindniets eingesteckt ist, wobei auf der sichtbaren Seite der radiale Bund 10 zur Anlage an der Außenseite der Werkstückplatte 17 zu liegen kommt. Der Dorn wird mit seinem Schaft 15 eingesteckt und bewegt sich infolge des balligen Endes 16 etwas in den konischen Abschnitt hinein. Wie zu erkennen, beginnt der konische Abschnitt bei aufgenommenem Niet früh im Bereich des Werkstücks 18. Der Nietschaft 11 steht dabei mit einem Abschnitt 19 um einen beträchtlichen Teil nach unten auf der unsichtbaren Seite des Werkstücks 18 über. Wird nun mit Hilfe eines Schlagwerkzeugs auf den Kopf 14 ein kräftiger Schlag ausgeführt, dringt der Dorn 15 weiter in die Bohrung ein und verdrängt zunächst axial, anschließend im wesentlichen radial das Material im konischen Abschnitt 13, so daß sich auch auf der unsichtbaren Seite ein flansch- oder wulstähnlicher radialer Abschnitt bildet, der sich unter mehr oder weniger Spannung gegen die Unterseite der Werkstückplatte 18 anlegt.

Der Nietdorn kann auch ohne Kopf 14 eingesetzt werden. Er kann daher erheblich kürzer als der Blindniet gemacht werden.

**A n s p r ü c h e :**

1. Blindniet zum Verbinden von plattenförmigen Werkstücken mittels an den Außenseiten der Werkstücke anliegender radialer Abschnitte und einem dazwischen angeordneten Schaft, in dessen Bohrung ein Dorn aufgenommen ist, dadurch gekennzeichnet, daß ein radialer Bund (10) vorgeformt ist und die Bohrung (12) des Schaftes (11) zum anderen Ende hin konisch verjüngt (13) ist.

2. Blindniet nach Anspruch 1, dadurch gekennzeichnet, daß der Konuswinkel etwa 10° beträgt.

3. Blindniet nach Anspruch 1 oder 2, dadurch gekennzeichnet, daß die Verjüngung (13) in einem Bereich beginnt, der innerhalb der Bohrung der miteinander zu verbindenden Werkstücke (17, 18) liegt.

4. Blindniet nach Anspruch 3, dadurch gekennzeichnet, daß die Verjüngung (13) kurz nach der Hälfte der Länge der übereinanderliegenden Bohrungen der Werkstücke (17, 18) beginnt.

5. Blindniet nach einem der Ansprüche 1 bis 4, dadurch gekennzeichnet, daß die Außenseite des Schaftes (11) über die ganze Länge annähernd den gleichen Durchmesser

0128380

6. Blindniet nach einem der Ansprüche 1 bis 5, dadurch gekennzeichnet, daß das untere Ende (16) des Dorns (15) gerundet
ist.

7. Blindniet nach einem der Ansprüche 1 bis 6, dadurch gekennzeichnet, daß der Dorn (15) glatt zylindrisch ist mit
gleichem Durchmesser.

Fig.1

Fig.2

Fig.3

0128380

## EINSCHLÄGIGE DOKUMENTE

EP 84105429.9

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | <u>GB - A - 2 038 979</u> (HARRY M. HAYTAYAN)<br><br>* Patentansprüche 1-3,5,6,8-12; Fig. 1,2,6,7 *<br><br>-- | 1,5-7 | F 16 B 19/10 |
| A | <u>DE - A1 - 2 953 402</u> (KRAEMER LUD-WIG)<br><br>* Patentanspruch 1; Fig. 2,3 *<br><br>-- | 1,4,5 | |
| A | <u>DE - B2 - 2 036 784</u> (AERPAT AG)<br><br>* Patentanspruch 1; Fig. 1 *<br><br>-- | 1,3,4 | |
| A | <u>CH - A - 548 548</u> (FIRMA HEINRICH BRECHBÜHL)<br><br>* Patentanspruch; Fig. 2,3 *<br><br>---- | 1 | |

RECHERCHIERTE
SACHGEBIETE (Int. Cl. 3)

F 16 B

Der vorliegende Recherchenbericht wurde für alle Patentansprüche erstellt.

| Recherchenort | Abschlußdatum der Recherche | Prüfer |
|---|---|---|
| WIEN | 10-08-1984 | REIF |